**Europäisches Patentamt**

(19) **European Patent Office**

**Office européen des brevets**

(11) Publication number: **0 116 137**
**B1**

(12) **EUROPEAN PATENT SPECIFICATION**

(45) Date of publication of patent specification: **03.06.87**

(51) Int. Cl.⁴: **B 65 H 35/00, B 31 B 1/60**

(21) Application number: **83112071.2**

(22) Date of filing: **01.12.83**

(54) **Bi-directional applicator head with dual tape supply.**

(30) Priority: **14.01.83 US 457853**

(43) Date of publication of application:
**22.08.84 Bulletin 84/34**

(45) Publication of the grant of the patent:
**03.06.87 Bulletin 87/23**

(84) Designated Contracting States:
**DE FR GB IT**

(56) References cited:
**EP-A-0 048 996**
**US-A-4 234 374**

(73) Proprietor: **THE BOEING COMPANY**
**7755 East Marginal Way South**
**Seattle Washington 98124 (US)**

(72) Inventor: **Frank, Ed**
**317 Spruce Street**
**Glenolden, Pennsylvania (US)**

(74) Representative: **Fuhlendorf, Jörn**
**Patentanwälte Dreiss, Hosenthien & Fuhlendorf**
**Gerokstrasse 6**
**D-7000 Stuttgart 1 (DE)**

Courier Press, Leamington Spa, England.

**Description**

Background of the Invention
*Field of the Invention*
The invention, applies generally to tape dispensing and application equipment and, more particularly, to a bi-directional tape applicator head with dual tape supply.

The invention was developed primarily for use in the field of composite technology. In particular, the invention is used in constructing structural and aerodynamic parts of an aircraft. However, the invention can also be used for the construction of structural and aerodynamic parts for craft other than aircraft, for the construction of missiles, satellites, automobile bodies, rail cars, ships and the like.

According to composite technology, a resin pre-impregnated tape having, for example, fiberglass filaments is utilized with or without additional resin adhesive to construct the particular part desired. The final part is built-up of a successive application of layers of the tape to a working surface as, for example, a mandrel. The resulting part is light in weight and highly load redundant, so it is more desirable than a corresponding part made from traditional materials such as steel, aluminum, etc.

*Prior Art*
In U.S. Patent No. 4,234,374 discloses a bi-directional tape applicator head for dispensing and compacting only one tape in opposite directions onto a working surface. This known tape applicator head includes a rotation rack assembly onto which the two dispensing blocks are mounted to be stationary relative to each other but to shift their positions in unison relative to the remainder of the head at the end of the tape laying pass. This movement of the dispensing blocks produces a step-over, or loop, in the tape at the end of each tape laying pass which prevents distortion of the tape as the tape is folded back on itself during reversal of the tape placement direction. Also, the dispensing block which is not engaged with the tape as the head is moved in a particular one of the two opposing directions, is spaced a predetermined distance from the working surface, to eliminate the possibility of this block engaging the end of a previously laid tape layer. Also, in this tape applicator head, the tape may be fed onto the working surface in any direction, horizontal or vertical.

EP—A—0 048 996 discloses a bi-directional tape applicator head with the same rotation rack assembly as is disclosed in the a.m. US-patent. The differences between the EP-patent and the US-patent lie in that in the former a unique feeder assembly is included which is absent in the latter.

Both of these applicator heads apply a single type of tape which is either unidirectional or X-ply, i.e., the tape filaments are parallel to the longitudinal axis of the tape (unidirectional) or inclined at an angle to the longitudinal axis of the tape (X-ply).

For those structures which only require on type of tape (unidirectional or X-ply), the applicator heads noted above are well suited. Many times, however, a structure requires both types of tape. In this event, the applicator heads noted above are not entirely satisfactory because of the need to change and re-thread the tape head with the different type of tape.

Object and Summary of the Invention
It is, therefore, the principal object of the present invention to provide a tape applicator head which can dispense more than one type of tape.

Therefore, according to the present invention tape applicator head for applying two different of fiber impregnated tape in two opposing directions onto a working surface, the different types of tape being distinguished by the orientation of the fibers, comprises: separate supply means for supplying each type of tape; mounting means; first dispensing means, mounted to the mounting means adjacent the working surface, which includes two spaced dispensing blocks between which a first of said tapes passes and which alternately engage said tape during movement of the head in the two opposing directions, for imparting a tension to said tape to draw the tape past the dispensing blocks onto the working surface, and compacting said tape so dispensed in each direction; and second dispensing means, mounted to the mounting means adjacent the working surface, which includes means for imparting a tension to the second of said tapes and advancing said second tape to the working surface and for compacting the second tape so dispensed during movement of the head in only one of said two opposing directions, wherein said first dispensing means compacts the second of said tapes during movement of the head in the other of said two opposing directions.

According to the present invention, a tape applicator head is adapted to dispense two types of tape onto the same work surface in two directions. The applicator head includes a source of supply for each tape and a first dispensing means having a single rotation rack assembly serving as part of the mechanism to dispense and compact one of the two tapes and to compact the other tape when it is dispensed in one of the two directions. Compacting of the other tape in the other direction is accomplished by the second dispensing means of the other tape. The second dispensing means cannot compact the tape it dispenses in the other of said two directions because it does not have a rotation rack assembly. It relies therefore on the first dispensing means which does have a rotation rack assembly to compact the tape it dispenses in the other of said two directions. In this way the two dispensing means can be situated relatively close to each other, and that is desirable, especially when the part being layed-up is small in size.

According to an embodiment of the invention, the tape applicator further comprises: first shearing means associated with said first dispensing means, through which said one of said tapes extends, for engaging and shearing said one of said tapes; and second shearing means associated with said second dispensing means through which said other of said tapes extends for engaging and shearing said other of said tapes.

According to another embodiment of the tape applicator head of the invention, the means for imparting tension to the other of said tapes and advancing said tape to the working surface is displaceable between the working surface and the supply means for supplying the other of said tapes.

### Brief Description of the Drawings

Fig. 1 is a plan view of a first tape applicator head, showing the movable components disposed to apply tape to a working surface in a direction from left to right;

Fig. 2 is another plan view of the tape applicator head of Fig. 1 showing the movable components disposed in alternate positions;

Fig. 3 is a plan view of a rotation rack assembly of the tape applicator head of Fig. 1, exclusive of the dispensing and compacting blocks and their mounting plate;

Fig. 4 is a side view of a dispensing and compacting block exclusive of the block belt;

Fig. 5 is an end view of the tape feeder assembly taken along the lines 5—5 of Fig. 1;

Fig. 6 is an end view of the tape shearing mechanism, taken along the lines 6—6 of Fig. 1;

Fig. 7 is a plan view of a second tape applicator head, showing the movable components disposed to dispense and compact tape in one direction onto a working surface;

Fig. 8 is another plan view of the embodiment shown in Fig. 7, in which the movable components are disposed in alternate positions; and

Fig. 9 is a plan view of a tape applicator head showing one embodiment of the dual tape application.

### Detailed Description of the Preferred Embodiment

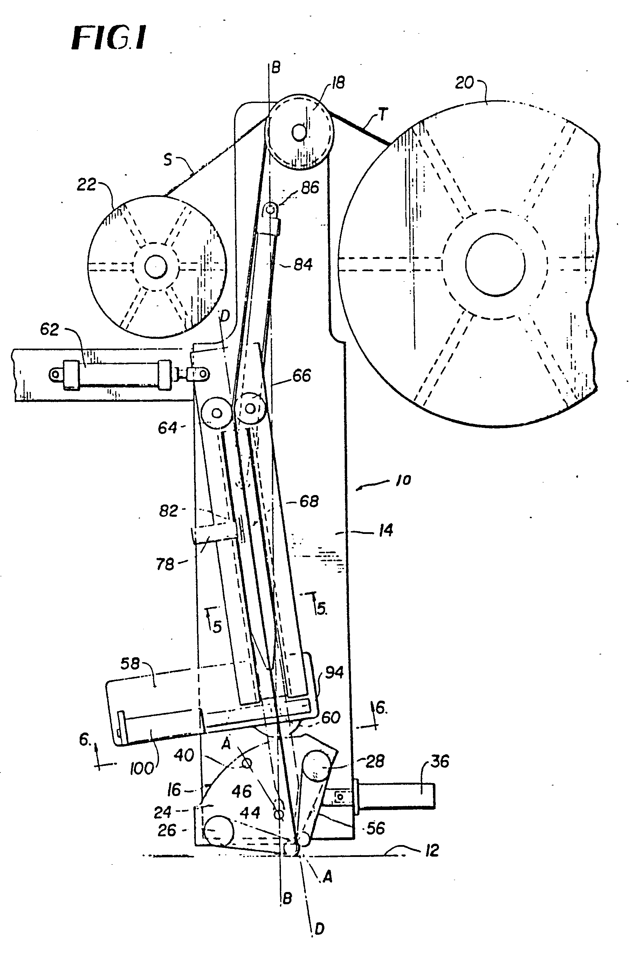

The tape applicator head 10 of Fig. 1 is carried by a stationary support structure or carriage in a manner not shown, for displacement relative to a working surface 12. The tape applicator head 10 can have as many degrees of freedom of movement relative to the working surface 12 as desired. The manner in which this is accomplished is not part of the invention. It is dictated primarily by the shape of the structure to be constructed. Preferably, the tape applicator head 10 is mounted for displacement along three mutually orthogonal axes relative to the work surface 12. In addition, the head may be rotatable relative to any or all of these three axes.

Alternatively, it is also possible to mount the tape applicator head in a stationary manner and to move the work surface 12 relative to the applicator head 10. Whether the applicator head 10 or the working surface 12 is moved is optional, and the structure for moving them is not discussed in further detail herein since it does not form a part of the invention.

The tape applicator head 10 includes an elongated mounting structure 14 which is affixed to the carriage of the tape applicator head. A rotation rack assembly 16 is mounted to one end of the mounting structure 14 to be positioned adjacent the working surface 12. A tape receiving roller 18 is pivotally mounted at the opposite end of the mounting structure 14 to receive the tape T from a supply reel 20 which is mounted to the carriage in a manner not shown. Also, the applicator head 10 may include a takeup reel 22, also mounted to the carriage, for removing and winding the backing strip S from the tape.

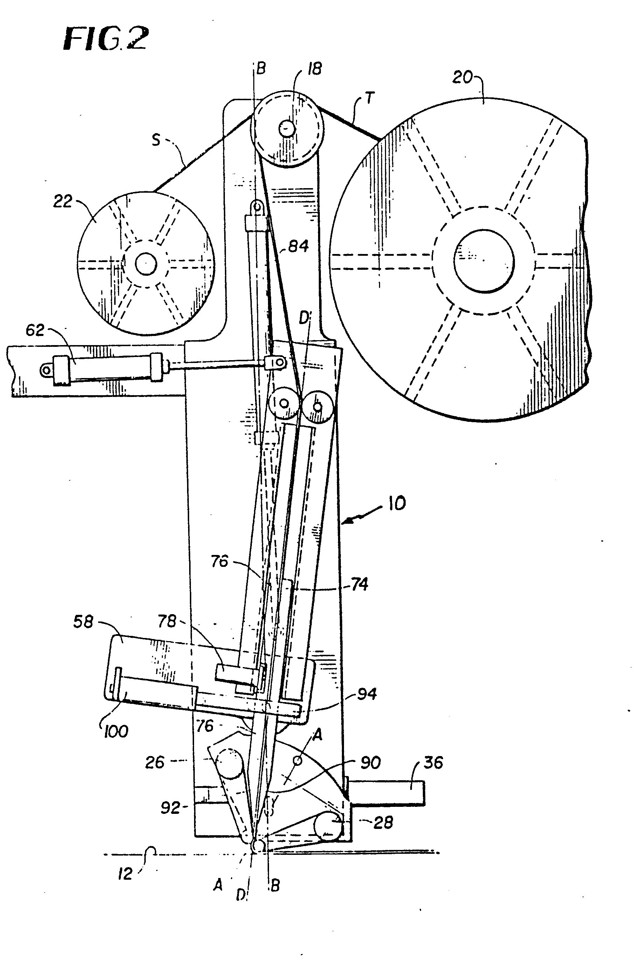

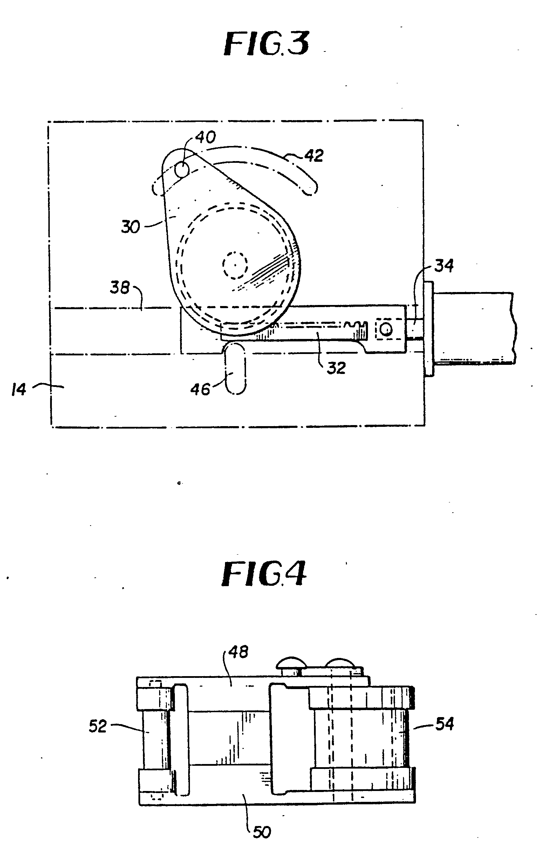

The rotation rack assembly 16 includes a swivel plate 24, on which a pair of dispensing and compacting blocks 26 and 28 are rigidly mounted, and a transmission including a gear 30 and a rack 32, as shown in Fig. 3. The gear 30 is pivotally mounted to the mounting structure 14. The rack 32 is embodied as an extension of a reciprocating rod 34 of an actuator 36 for moving the swivel plate 24 between a first position (Fig. 1) and a second position (Fig. 2). The rack 32 is slideable within a slot 38 formed in the mounting structure 14.

The two dispensing and compacting blocks 26 and 28 are symmetrically disposed on opposite sides of a center line A—A of the swivel plate 24. The swivel plate 24 is pivotally connected to the gear 30 by a pin 40 disposed on the center line A—A of the swivel plate 24. The pin 40 extends through the gear 30 into an arcuate slot 42 formed in the mounting structure 14. The opposite ends of the arcuate slot 42 serve as stops for positioning the swivel plate 24 in its two positions. The swivel plate also includes a pivot pin 44, disposed on the center line A—A, for pivotally and slideably connecting the swivel plate 24 to the mounting structure 14. The pivot pin 44 is received in and travels along a slot 46 formed in the mounting structure 14 and extending along a center line B—B orthogonal to the working surface 12.

The dispensing and compacting blocks 26, 28 are constructed as shown in Fig. 4. Each block 26, 28 includes side plates 48 and 50 between which rollers 52 and 54 are mounted. A belt 56 (Fig. 1) extends about the two rollers 52 and 54.

The swivel plate 24, and the dispensing and compacting blocks 26, 28 fixed to the swivel plate 24, are pivotally and translationally shifted between their two positions at each terminal end of a tape laying pass by the actuator 36 in the same manner as the rotation rack assembly described in the above referenced U.S. Patent 4,259,144 which is hereby incorporated by reference.

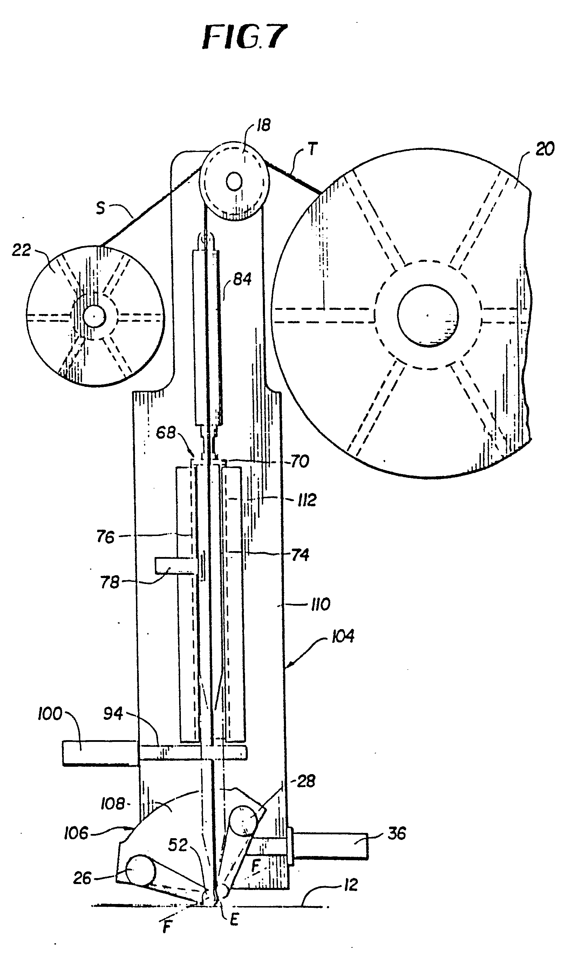

One end of a support member 58 is pivotally connected to the mounting structure 14, for example, by a pivot pin 60, to allow movement of the support member 58 with respect to the mounting structure 14 about a pivot axis C—C (Fig. 6). An actuator 62 is connected between an opposite end of the support member 58 and the carriage in a manner not shown to pivotally shift the support member 58 between a first position, shown in Fig. 1, and a second position, shown in Fig. 2. Two adjacent guide rollers 64, 66, through which the tape extends, are pivotally connected to the support member 58 adjacent the opposite end thereof.

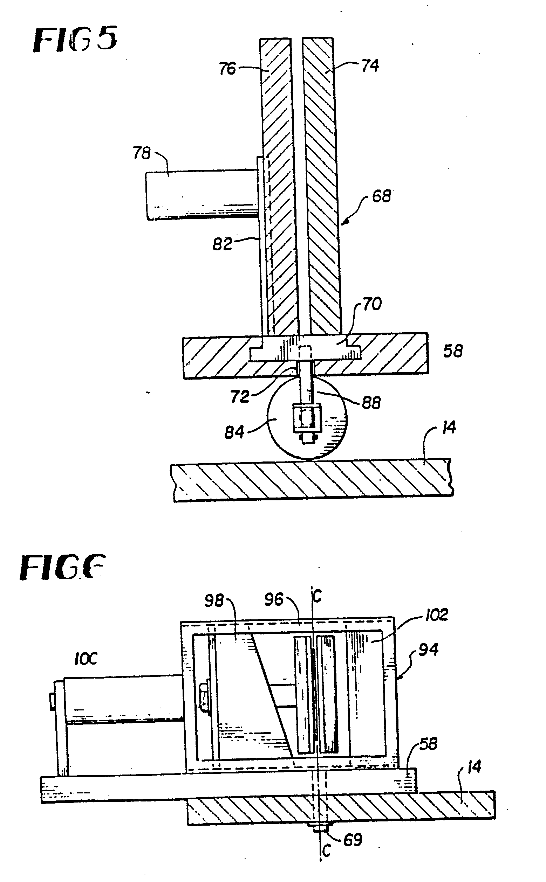

A tape feeder assembly 68 is slideably carried by the support member 58 for translation along a linear path which is parallel to a center line D—D of the support assembly 58 extending between the guide rollers 66 and intersecting the pivot axis C—C of the support member 58. As shown in Fig. 5, the feeder assembly 68 includes a guide plate 70 which is slideably disposed within a slot 72 of the support member 58 which defines the path of travel of the feeder assembly 68. The feeder assembly 68 includes the two adjacent, parallel-disposed, tape feeder plates 74, 76, through which the tape extends. The feeder plate 74 is affixed to the guide plate 70. The other feeder plate 76 is attached to an actuator 78 mounted to the guide plate 70 for moving the feeder plate 76 between a disengaged position at which the two feeder plates 74, 76, are spaced from each other and from the tape extending therebetween, and an engaged position at which both of the feeder plates 74, 76, are engaged with opposite sides of the tape extending therebetween. The actuator 78 is connected to the guide plate 70 by a mounting plate 82 which is affixed to, or integral with, the guide plate 70.

An actuator 84 is pivotally connected at one end by a pivot pin 86 to the mounting structure 14 and is pivotally connected at an opposite end to the feeder assembly 68 by a pivot pin 88 affixed to the guide plate 70 and extending from an opposite side of the support member slot 72. The actuator 84 is arranged to move the feeder assembly 68 along the linear path of travel defined by the slot 72 between a retracted position, shown in Fig. 1, at which the feeder assembly 68 is disposed between the guide rollers 64, 66 and the pivot axis C—C of the support member 58 defined by the pivot pin 60, and an extended position, shown in Fig. 2, at which the tapered ends 90, 92 of the feeder plates 74, 76 extend between the dispensing and compacting blocks 26, 28 in close proximity to the tape engaging surface portions of these blocks 26, 28.

A guillotine-type tape shearing mechanism 94, through which the tape extends, is mounted to the support member 58 adjacent the pivot pin 60. As shown in Fig. 6, the shearing mechanism 94 includes a frame 96 affixed to the support member 58, a tape cutting blade 98 slideably held within the frame 96 for movement across the path of the tape, and an actuator 100 connected between the blade 98 and the support member 58, for moving the blade 98 between an open position in which it is spaced from the tape extending through the shearing mechanism 94 and a closed position at which the blade 98 engages an anvil member 102 affixed to the support member 58 after shearing the tape.

The pivot axis C—C of the support member 58 defined by the pivot pin 60 is disposed along the center line B—B, passing through the pivot axis of the swivel plate 24 defined by the pivot pin 44, which is equidistant from the first and second positions of the pin 40 carried by the swivel plate 24. The first position of the support member 58, shown in Fig. 1, is selected so that the guide roller 66 of the support member 58 and the dispensing block 26 of the rotation rack assembly 16 engaging the tape define a linear path of travel for the tape which passes through the pivot axis C—C of the support member 58. Similarly, the second position of the support member 58 shown in Fig. 2 is selected so that, when the swivel plate 24 is disposed in its corresponding second position, the guide roller 64 and the dispensing block 28 engaging the tape define the linear path of travel for the tape which also passes through the pivot axis C—C of the support member 58 defined by the pivot pin 60. Thus, when the swivel plate 24 and the support member 58 are both disposed in their corresponding first or second positions, and the movable feeder plate 76 is disposed in its unengaged position, the feeder assembly 68 can be moved between its retracted and extended positions without engaging the tape extending through the feeder assembly 68. Also, since the angular displacement of the swivel plate 24 when it is disposed in its first position, relative to the center line B—B between the pivot axis C—C of the support member 58 and the pivot axis of the swivel plate 24 defined by the pivot pin 44 is equal, and opposite to the angular displacement of the swivel plate 24 when it is disposed in its second position relative to the same center line B—B, the displacement of the guide roller 66 from the center line B—B when the support member 58 is disposed in its first position will be approximately equal to and opposite the displacement of the guide roller 64 from the center line B—B when the support member 58 is disposed in its second position.

The pivot pin 86 connecting the feeder assembly actuator 84 to the support member 58 is also disposed along the center line B—B, so that the work requirements of the feeder assembly 68 between its retracted and extended positions are the same regardless of whether the support member 58 and the swivel plate 24 are disposed in either their corresponding first or second positions. Also, the tape receiving roller 18 is disposed so that the point on its periphery at which the tape is disengaged falls on the center line B—B, so that the support member 58 can be shifted between its first and second position without increasing the tension in the tape or causing slack in the tape between the receiving roller 18 and the dispensing blocks 26, 28.

Since the feeder plates 74, 76 of the feeder assembly 68 must extend through the open tape shearing mechanism 94 when the support member 58 and the swivel plate 24 are disposed in either their corresponding first or second positions, the tape shearing mechanism 94 is disposed adjacent the pivot pin 60, defining the pivot axis C—C of the support member 58, to thus minimize the clearance required between the open blade 98 and the anvil 102 to allow passage of the feeder plate 74, 76 therebetween.

Preferably, all surfaces of the various elements of the tape applicator head 10 which engage the tape are formed from or coated with a material, such as teflon, having inherent release characteristics. These tape engaging surfaces include the peripheral surfaces of the rollers 18, 64, and 66, the adjacent planar surfaces of the feeder plates 74 and 76, and the peripheral surfaces of the belts 56 of the dispensing and compacting blocks 26 and 28.

To prepare a tape laying run in one direction, for the applicator head shown in Figs. 1 and 2, the feeder plate actuator 78 is actuated to move the feeder plate 76 to its disengaged position, the feeder assembly actuator 84 is actuated to move the feeder assembly 68 into its retracted position, and the shearing mechanism actuator 100 is actuated to move the blade 98 to its open position, if these various elements are not already so disposed. The rotation rack assembly actuator 36 and the support member actuator 62 are then actuated to move the swivel plate 24 and the support member 58 into their corresponding first or second positions proper for the direction in which tape is to be applied against the working surface 12. Next, a roll of tape is loaded onto the supply reel 20 and the tape is passed over the receiving roller 18. The backing strip S of the tape T is stripped from the end of the tape and attached to the takeup reel 22. The tape is then fed between the guide rollers 64, 66, the feeder plates 74, 76, and the dispensing and compacting blocks 26, 28. The tape applicator head 10 is then moved at an acute angle towards the working surface 12 to wipe the tape extending through the dispensing and compacting blocks 26, 28 about the block closest to the working surface 12, which is then positioned so that the minimum clearance between the tape engaging surface portion of this block and the working surface is less than the thickness of the tape. This is illustrated in Fig. 1, which shows the various elements of the applicator head 10 disposed in the proper positions for executing a tape laying pass in a direction from left to right as shown in this Fig. The feeder element 76 is disposed in its open position, the feeder assembly 68 is disposed in its retracted position, the tape-shearing mechanism 94 is open, and the support member 58 and swivel plate 24 are disposed in their first positions for applying tape in a direction from left to right. The tape is engaged with the receiving roller 18, the guide roller 66, and the dispensing and compacting block 26, which compacts this tape against the working surface 12 as the tape applicator head 10 is moved to the right, as shown in Fig. 1.

When it is desirable to apply individual lengths of tape in opposite directions, rather than apply a continuous length of tape which is folded over at the terminal end of each tape laying pass, the tape laying pass in a direction from left to right as shown in Fig. 1 is stopped at a predetermined distance before the end of required dimension to be reached, which is equal to the length of tape extending from the tape shearing mechanism 94 at the pivot axis C—C of the support member 58 about the dispensing and compacting block 26 to the working surface 12. The actuator 100 is then actuated to move the blade 98 from its open position to its closed position, and back to its open position, to shear the tape. Travel of the tape applicator head is then reinitiated in a direction from left to right as shown in Fig. 1 to complete placement and compacting of the tape onto the working surface 12, after which the tape applicator head 10 is moved away from the working surface 12.

The feeder plate actuator 78 is actuated to move the feeder plate 76 into its engaged position at which the tape is clamped between the feeder plates 74, 76 to maintain proper projection of the tape beyond these feeder plates 74, 76 to the shearing mechanism 94. The support member actuator 62 and the rotation rack assembly actuator 36 are then activated to move the support member 58 and the swivel plate 24 into their second positions shown in Fig. 2, proper for tape placement in a right to left direction. The feeder assembly actuator 84 is then actuated to move the feeder assembly 68 from its retracted position to its extended position, also shown in Fig. 2, to feed the tape projecting from the feeder plates 74, 76 between and a predetermined distance beyond the dispensing and compacting blocks 26, 28. The tape applicator head 10 is then moved toward the working surface 12 at an angle so as to wipe the tape extending through and beyond the dispensing and compacting rollers 26, 28 about the dispensing and compacting block 28, until the clearance between the block 28 and the working surface is less than the thickness of the tape. The feeder plate actuator 78 is actuated to move the feeder plate 76 to its disengaged position, and the feeder assembly actuator 84 is then actuated to move the feeder assembly 68 to its retracted position. The tape, which is held against the working surface 12 by the block 28, is disengaged from the feeder plates 74, 76 as these plates are moved to their disengaged, retracted positions.

If, at the end of this next tape laying pass, from right to left as shown in Fig. 1, it is desired to fold the tape back upon itself and apply another layer of tape in a direction from right to left, the rotation rack assembly actuator 36 and the support member actuator 62 are actuated to move the swivel plate 24 and the support member 58 from their second positions to their first positions proper for tape placement in a left to right direction, as seen in Fig. 1, during which the pivotal and translational movement of the dispensing and compacting blocks 26, 28 produce a localized tension relieving loop in the tape, in the same manner as described in the above-referenced U.S. Patent.

Since the support member 58 and the swivel plate 24 are both switched between their first and second positions at the same time, the support member actuator 62 could be eliminated by making the support member 58 integral with the swivel plate 24, with the guide rollers 64, 66, being disposed on opposite sides of the center line A—A between the pins 40, 44 of the swivel plate 24. However, in such an embodiment, the angular travel of the guide rollers 64, 66 would be the same as that of the dispensing and compacting blocks 26, 28, which would greatly increase the spacing between the supply reel 20 and the takeup reel 22 and, consequently, the width of the tape applicator head 10. By pivotally connecting the support member 58 to the mounting structure 14 at a point spaced from the point at which the swivel plate 24 is pivotally connected to the mounting structure 14, as shown in the embodiment of Fig. 1, the angular travel of the support member 58 between its first and second positions can be greatly reduced, to thus result in a relatively small and compact tape applicator head 10.

Also, the feeder assembly actuator 84 could be disposed to extend along the center line D—D, with one end connected to the support member 58 and an opposite end connected to the feeder assembly 68. However, in such an embodiment, the length of the support member 58 and the total mass moved by the actuator 78 would be greatly increased over that of the embodiment of Fig. 1.

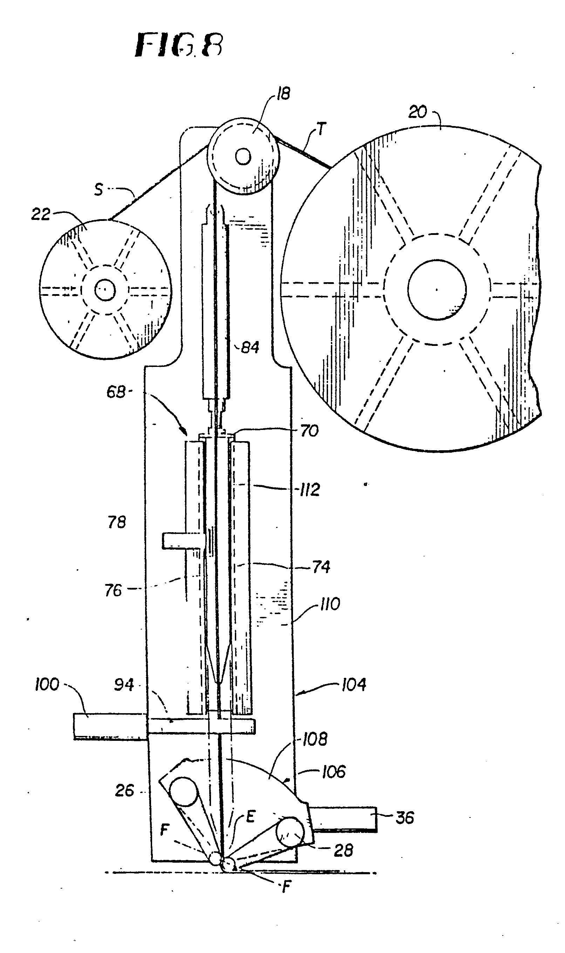

The tape applicator head 104 shown in Figs. 7 and 8 may be used to dispense and compact tape in two opposing directions onto a working surface where the ability to produce a tension-relieving loop in the tape end of each tape laying pass is not required, as for example, where individual lengths of tape are applied during each tape laying pass. The same identifying numbers have been used for the elements in the embodiment of Fig. 7 corresponding to similar or identical elements in the embodiment of Fig. 1.

In Fig. 7, a rotation rack assembly 106 includes a swivel plate 108 having affixed thereto two dispensing and compacting blocks 26, 28. Each dispensing and compacting block 26, 28 includes side plates 48 and 50 (Fig. 4) between which rollers 52 and 54 are mounted, and a belt 56 which extends about the two rollers 52 and 54. The swivel plate 108 is pivotally connected to a mounting structure 110 of the tape applicator head 104 for rotation about a pivot axis E extending parallel to the axes of the dispensing and compacting block rollers 52 and passing through the midpoint of the center line F—F extending between the two rollers 52 of the dispensing and compacting blocks 26, 28. The swivel plate 108 is pivotable about the axis E from a first position, shown in Fig. 7, at which the dispensing and compacting block 26 is correctly positioned for laying and compacting tape against the working surface 12 in a direction from left to right, and a second position, shown in Fig. 8, at which the dispensing and compacting block 28 is correctly positioned to dispense and compact tape against the working surface 12 in a direction from right to left.

A tape receiving roller 18 is mounted at an opposite end of the mounting structure 110 to receive tape from a tape supply reel 20 and to define, together with the two dispensing and compacting blocks 26, 28, a path of travel for the tape extending from the receiving roller 18 through the dispensing and compacting blocks 26, 28 to the work surface 12 which is substantially orthogonal to the direction of tape placement. A tape feeder assembly 68, through which the tape extends, is slideably mounted to the mounting structure 110 for linear movement along a path of travel parallel to the tape extending through the feeder assembly 68. The feeder assembly 68 includes a guide plate 70 which is slideably disposed within a slot 112 extending through the mounting structure 110 and defining the feeder assembly path of travel. The feeder assembly 68 includes a fixed feeder plate 74 and a moveable feeder plate 76 disposed on opposite sides of the tape extending through the feeder assembly 68. The fixed feeder plate 74 is affixed to one side of the guide plate 70, and the moveable feeder plate 76 is connected to an actuator 78 carried by the guide plate 70, for movement of the feeder plate 76 between a disengaged position at which the feeder plates 74, 76 engage opposite sides of the tape extending therebetween.

A guillotine-type tape shearing mechanism 94, through which the tape extends, is disposed on the mounting structure 110 adjacent the swivel plate 108. The shearing mechanism 94 includes a blade 98 which is connected to an actuator 100 for holding the blade between an open position and a closed position to shear the tape extending therethrough. When the blade 98 is disposed in its open position, the feeder assembly 68 is moveable by the actuator 84 from its retracted position to its extended position at which position the feeder plates 74, 76, extend through the shearing mechanism 94 towards the pivot axis E of the swivel plate 108.

The procedure for using the tape applicator head 104 of Fig. 7 to dispense and compact a length of tape in one direction against the working surface 12 and to dispense and compact another length of tape against the working surface 12 in an opposing direction, is similar to the same procedure described above in connection with the embodiment of Fig. 1. The tape applicator head 104, as shown in Fig. 7, has its various elements properly disposed for initiating a tape laying pass in a direction from left to right. The blade 98 is disposed in its open position, the feeder plate 76 is disposed in its disengaged position, the feeder assembly 68 is disposed in its retracted position, and the swivel plate 108 is disposed in the proper position for the dispensing and compacting block 26 to dispense and compact the tape against the working surface 12 as the tape applicator head 104 is moved to the right relative to the working surface 12. The linear tape placement is stopped a predetermined distance before the end of the required dimension to be reached, which is equal to the length of tape extending from the shearing mechanism 94 about the dispensing and compacting block 26 to the working surface 12. The tape is then sheared by the shearing mechanism 94 and the linear tape placement in a direction from left to right is continued to complete placement of the tape. Next, the tape applicator head 104 is moved away from the working surface 12, the actuator 78 is actuated to clamp the tape between the feeder plates 76, 78 and a swivel plate actuator 114 is actuated to pivotally move the swivel plate 108 about the axis E from its first position to its second position at which the dispensing and compacting block 28 is properly disposed for laying tape onto the working surface 12 in a direction from right to left, as seen in Fig. 8. The feeder assembly actuator 84 is then actuated to move the feeder assembly 68 from its retracted position through the open shearing position 94 to its extended position, to move the portion of the tape extending from the feeder plate 74, 76 between and a predetermined distance beyond the dispensing and compacting blocks 26, 28.

The tape applicator head 104 is then moved at an angle towards the working surface 12 until the minimum clearance between the dispensing and compacting block 28 and the working surface 12 is less than the thickness of the tape extending about and between the block 28 and the working surface 12. The actuator 78 is actuated to move the feeder plate 76 to its disengaged position, and then the actuator 84 is actuated to move the feeder assembly 68 to its retracted position, disengaging the tape from the feeder plates 76, 78. The tape applicator head 104 is then moved to the left relative to the working surface 12 as seen in Fig. 8, to apply and compact the tape against the working surface 12 in an opposing direction.

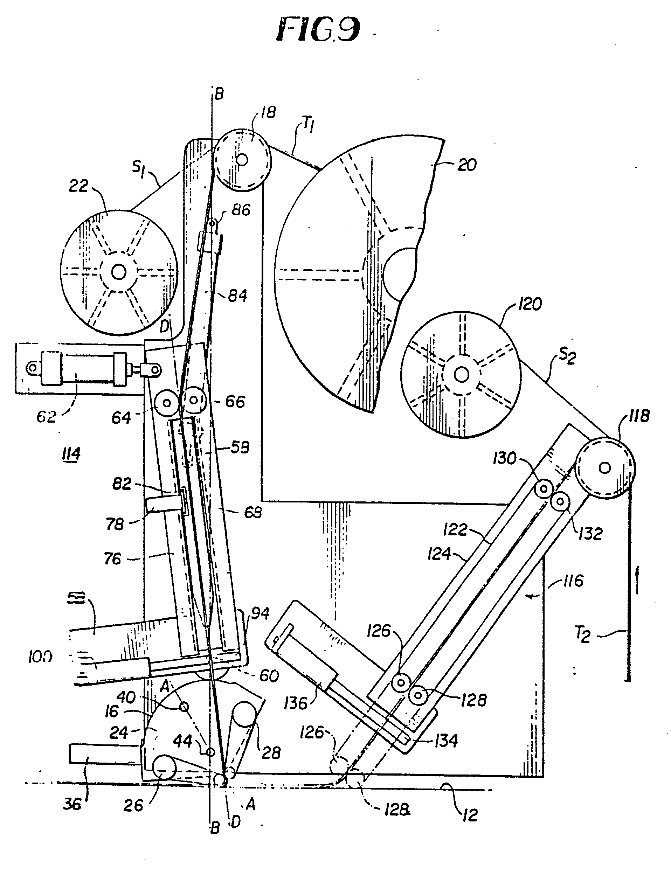

Often it becomes desirable to fabricate a structural part having more than one type of tape, for example, unidirectional and X-ply tape. For this purpose the applicator head 114 (Fig. 9) has been developed.

The applicator head 114 includes an assembly for feeding, dispensing and compacting the tape $T_1$. The assembly may be similar to that of either the embodiment of Figs. 1—2 or that of Figs. 7—8. For this purpose the embodiment illustrated in U.S. Patent No. 4,234,374 could also be used. In any case, a feeding and partial compacting assembly 116 for tape $T_2$ is provided. The tape $T_2$ is supplied from a supply reel (not shown) over a tape receiving roller 118. The backing strip $S_2$ is wound on a takeup reel 120. The tape without the backing strip $S_2$ is passed to a belt drive 122 mounted within a housing 121 for axial displacement toward the working surface 12. The means for advancing and retracting the belt drive 122 are not shown. The belt drive 122 includes four rollers 126, 128, 130 and 132. Preferably either roller 130 or 132 is driven by means not shown to advance the tape outwardly from rollers 126 and 128. The roller 128 serves as a compacting roller during the dispensing of tape onto working surface 12 when the applicator head 114 is moved to the left as shown in Fig. 9. For this purpose, the belt drive 122 is in the location indicated by the dashed lines. To dispense tape in the opposite direction, i.e., from left to right as shown in Fig. 9, the roller 126 is utilized. When dispensing tape in this direction, compaction is achieved by the compacting block 26 of the rotation rack assembly 16. For this purpose the assembly 16 is oriented as shown in Fig. 9. To sever the tape a blade 134 and actuator 136, similar to the blade 94 and actuator 100 are provided.

The rotation rack assembly 16 serves as a first dispensing means, while the feeding and partial compacting assembly 116 serves as a second dispensing means. The first dispensing means advances and dispenses (including compacting) the unidirectional tape $T_1$ in two opposed directions, while the second dispensing means advances and dispenses tape $T_2$ in two directions and compacts it in only one direction. The tape $T_2$ is compacted in the other direction by the first dispensing means.

### Claims

1. A tape applicator head (114) for applying two different types of fiber impregnated tape ($T_1$, $T_2$) in two opposing directions onto a working surface (12), the different types of tape ($T_1$, $T_2$) being distinguished by the orientation of the fibers, comprising: separate supply means for supplying each type of tape ($T_1$, $T_2$); mounting means (14); first dispensing means (16), mounted to the mounting means (14) adjacent the working surface (12), which includes two spaced dispensing blocks (26, 28) between which a first ($T_1$) of said tapes ($T_1$, $T_2$) passes and which alternately engage said tape ($T_1$) during movement of the head (114) in the two opposing directions, for imparting a tension to said tape ($T_1$) to draw the tape past the dispensing blocks (26, 28) onto the working surface (12), and compacting said tape ($T_1$) so dispensed in each direction; and second dispensing means (116), mounted to the mounting means (14) adjacent the working surface (12), which includes means for imparting a tension to the second ($T_2$) of said tapes ($T_1$, $T_2$) and advancing said second tape ($T_2$) to the working surface (12), and for compacting the second tape ($T_2$) so dispensed during movement of the head (114) in only one of said two opposing directions, wherein said first dispensing means (16) compacts the second ($T_2$) of said tapes ($T_1$, $T_2$) during movement of the head (114) in the other of said two opposing directions.

2. The tape applicator head as defined in claim 1, further comprising:
first shearing means (94) associated with said first dispensing means (16), through which said first ($T_1$) of said tapes ($T_1$, $T_2$) extends, for engaging and shearing said first of said tapes; and
second shearing means (134) associated with said second dispensing means (116) through which said second ($T_2$) of said tapes ($T_1$, $T_2$) extends for engaging and shearing said second ($T_2$) of said tapes.

3. The tape applicator head as defined in claim 2, further comprising:

guide means (64, 66), mounted to the mounting means (14) between the supply means (20) of said first ($T_1$) of said tapes ($T_1$, $T_2$) and the first dispensing means (16), for positioning said first of said tapes and defining, with said first dispensing means (16), a path of travel of said first ($T_1$) of said tapes ($T_1$, $T_2$) between the guide means (64, 66) and the working surface (12); and

feeder means (68), through which said first ($T_1$) of said tapes ($T_1$, $T_2$) extends, said feeder means (68) being positioned intermediate the guide means (20) and the first shearing means (94), for engaging and moving said first ($T_1$) of said tapes ($T_1$, $T_2$) between the two dispensing blocks (26, 28) toward the working surface (12).

4. The tape applicator head as defined in claim 3, wherein the feeder means comprises:

a feeder assembly (68) which includes two feeder elements (74, 76) disposed on opposite sides of said first ($T_1$) of said tapes ($T_1$, $T_2$) extending therethrough and engaging means (78), connected between the two feeder elements (74, 76), for moving at least one (76) of the two feeder elements (74, 76) between a disengaged position at which the two feeder elements (74, 76) are spaced from each other and from the first tape ($T_1$) extending therebetween, and an engaged position at which both feeder elements (74, 76) are engaged with opposite sides of the first tape ($T_1$) extending therebetween; and

insertion means (62) for moving the feeder assembly (68) along the path of travel of said first ($T_1$) of said tapes {$T_1$, $T_2$} between a retracted position at which the feeder assembly (68) is spaced from the shearing means (94) intermediate the guide means (20) and the shearing means (94) and an extended position at which the two feeder elements (74, 76) of the feeder assembly (68) extend through the shearing means (94) in close proximity to the dispensing blocks (26, 28).

5. The tape applicator head as defined in one of claims 1 to 4, wherein said first dispensing means (16) comprises:

a swivel plate (24), to which the two dispensing blocks (26, 28) are affixed, the swivel plate (24) being pivotally connected to the mounting means (14); and dispensing actuator means (36) for rotating the swivel plate (24) between a first position, at which a first dispensing block (26) of the two dispensing blocks (26, 28) is positioned adjacent the working surface (12) to engage and lay said first ($T_1$) of said tapes ($T_1$, $T_2$) onto the working surface (12) in a first direction of the two opposing directions, and a second position, at which the second dispensing block (28) of the two dispensing blocks (26, 28) is positioned adjacent the working surface (12) to engage and lay said first ($T_1$) of said tapes ($T_1$, $T_2$) onto the working surface (12) in the second direction of the two opposing directions, wherein the two dispensing blocks (26, 28) are disposed on the swivel plate (24) so that the path of travel of said first ($T_1$) of

said tapes ($T_1$, $T_2$) between the guide means (20) and the dispensing means (16) when the swivel plate (24) is disposed in its first position corresponds to the path of travel of said first ($T_1$) of said tapes ($T_1$, $T_2$) between the guide means (20) and the dispensing means (16) when the swivel plate (24) is disposed in its second position.

6. The tape applicator head as defined in one of claims 1 to 5, wherein the means (122) for imparting tension to the second ($T_2$) of said tapes ($T_1$, $T_2$) and advancing said second tape ($T_2$) to the working surface (12) is displaceable between the working surface (12) and the supply means for supplying the second ($T_2$) of said tapes ($T_1$, $T_2$).

**Patentansprüche**

1. Vorrichtung (114) zum Aufbringen zweier verschiedener Arten glasfaserverstärkter Bänder ($T_1$, $T_2$) in entgegengesetzten Richtungen auf eine Arbeitsfläche (12), wobei sich die verschiedenen Arten von Bänder ($T_1$, $T_2$) durch die Ausrichtung der Glasfasern voneinander unterscheiden, dadurch gekennzeichnet, daß die Vorrichtung folgendes aufweist:

Separate Zuführmittel zum Zuführen jeder Bandart ($T_1$, $T_2$); Befestigungsmittel (14); ein erstes Abgabemittel (16), das mit dem Befestigungsmittel (14) nahe der Arbeitsfläche (12) verbunden ist und das zwei im Abstand voneinander angeordnete Abgabeblöcke (26, 28) enthält, zwischen denen ein erstes Band ($T_1$) der Bänder ($T_1$, $T_2$) hindurchläuft und die abwechselnd das Band ($T_1$) während der Bewegung der Vorrichtung (114) in die zwei entgegengesetzten Richtungen berühren und so dem Band ($T_1$) eine Zugspannung erteilen und damit das Band an den Abgabeblöcken (26, 28) vorbei auf die Arbeitsfläche (12) ziehen, und die das so in jede Richtung abgegebene Band ($T_1$) aufdrücken; und ein zweites Abgabemittel (116), das nahe der Arbeitsfläche (12) mit dem Befestigungsmittel fest verbunden ist und das Mittel besitzt, das dem zweiten Band ($T_2$) der Bänder ($T_1$, $T_2$) eine Zugspannung erteilt und das zweite Band ($T_2$) auf der Arbeitsfläche (12) bewegt und das das während der Bewegung der Vorrichtung (114) in nur eine der beiden entgegengesetzten Richtungen so abgegebene zweite Band ($T_2$) aufdrücken, wobei das erste Abgabemittel (16) das zweite Band ($T_2$) der Bänder ($T_1$, $T_2$) während der Bewegung der Vorrichtung (114) in die andere der beiden entgegengesetzten Richtungen aufdrückt.

2. Vorrichtung nach Anspruch 1, dadurch gekennzeichnet, daß sie ferner folgendes aufweist:

ein erstes Schneidmittel (94), das dem ersten Abgabemittel (16) zugeordnet ist und durch welches sich das erste Band ($T_1$) der Bänder ($T_1$, $T_2$) erstreckt und das zum Berühren und Abschneiden des ersten Bandes dient; und

ein zweites Schneidmittel (134), das dem zweiten Abgabemittel (116) zugeordnet ist und durch das sich das zweite Band ($T_2$) der Bänder ($T_1$, $T_2$) zurückerstreckt und das zum Berühren und Abschneiden des zweiten Bandes ($T_2$) dient.

3. Vorrichtung nach Anspruch 2, dadurch gekennzeichnet, daß sie ferner folgendes aufweist:

Führungsmittel (64, 66), die zwischen dem Zuführmittel (20) des ersten Bandes ($T_1$) der Bänder ($T_1$, $T_2$) und dem ersten Abgabemittel (16) mit dem Befestigungsmittel (14) fest verbunden ist und die das erste Band positioniert und zusammen mit dem ersten Abgabemittel (16) eine Bewegungsbahn für das erste Band ($T_1$) der Bänder ($T_1$, $T_2$) zwischen dem Führungsmittel (64, 66) und der Arbeitsfläche (12) begrenzt; und

ein Zubringermittel (68), durch das sich das erste Band ($T_1$) der Bänder ($T_1$, $T_2$) erstreckt und das zwischen dem Führungsmittel (20) und dem ersten Schneidmittel (94) angeordnet ist und so das erste Band ($T_1$) der Bänder ($T_1$, $T_2$) berührt und zwischen den beiden Abgabeblöcken (26, 28) zur Arbeitsfläche (12) hin bewegt.

4. Vorrichtung nach Anspruch 3, dadurch gekennzeichnet, daß das Zubringermittel folgendes aufweist:

eine Zubringeranordnung (68), die zwei Zubringerelemente (74, 76), die an gegenüberliegenden Seiten des sich hindurcherstreckenden ersten Bandes ($T_1$) der Bänder ($T_1$, $T_2$) angeordnet sind und ein Mitnehmermittel (78) aufweist, das zwischen den beiden Zubringerelementen (74, 76) gehalten ist und zumindest eines (76) der beiden Zubringerelemente (74, 76) zwischen einer ausgerückten Position, in der die beiden Zubringerelemente (74, 76) in einem Abstand voneinander und vom ersten sich dazwischen erstreckenden Band ($T_1$) angeordnet sind, und einer Eingriffsposition bewegt, in der beide Zubringerelemente (74, 76) mit den gegenüberliegenden Seiten des ersten sich dazwischen erstreckenden Bandes ($T_1$) in Berührung sind; und ein Einschiebemittel (62) zum Bewegen der Zubringeranordnung (68) längs der Bewegungsbahn des ersten Bandes ($T_1$) der Bänder ($T_1$, $T_2$) zwischen einer zurückgezogenen Position, in der die Zubringeranordnung (68) von dem Schneidmittel (94) zwischen dem Führungsmittel (20) und dem Schneidmittel (94) im Abstand angeordnet ist, und einer vorstehenden Position, in der die beiden Zubringerelemente (74, 76) der Zubringeranordnung (68) sich in unmittelbarer Nähe der Abgabeblöcke (26, 28) durch das Schneidmittel (94) erstrecken.

5. Vorrichtung nach einem der Ansprüche 1 bis 4, dadurch gekennzeichnet, daß das erste Abgabemittel (16) folgendes aufweist:

eine Schwenkplatte (24), an der die beiden Abgabeblöcke (26, 28) befestigt sind und die am Befestigungsmittel (14) schwenkbar gehalten ist; und ein Abgabebetätigungsmittel (36) zum rotierenden Antreiben der Schwenkplatte (24) zwischen einer ersten Position, in der ein erster Abgabeblock (26) der beiden Abgabeblöcke (26, 28) nahe der Arbeitsfläche (12) angeordnet ist und so das erste Band ($T_1$) der Bänder ($T_1$, $T_2$) berührt und auf die Arbeitsfläche (12) in die erste der beiden entgegengesetzten Richtungen legt, und einer zweiten Position, in der der zweite Abgabeblock (28) der beiden Abgabeblöcke (26, 28) nahe der Arbeitsfläche (12) angeordnet ist und so das erste Band ($T_1$) der Bänder ($T_1$, $T_2$) berührt und auf die Arbeitsfläche (12) in die zweite der beiden entgegengesetzten Richtungen legt, wobei die beiden Abgabeblöcke (26, 28) auf der Schwenkplatte (24) derart angeordnet sind, daß die Bewegungsbahn des ersten Bandes ($T_1$) der Bänder ($T_1$, $T_2$) zwischen dem Führungsmittel (20) und dem Abgabemittel (16) dann, wenn die Schwenkplatte (24) in ihrer ersten Position angeordnet ist, der Bewegungsbahn des ersten Bandes ($T_1$) der Bänder ($T_1$, $T_2$) zwischen dem Führungsmittel (20) und dem Abgabemittel (16) dann, wenn die Schwenkplatte (24) in ihrer zweiten Position angeordnet ist, entspricht.

6. Vorrichtung nach einem der Ansprüche 1 bis 5, dadurch gekennzeichnet, daß das Mittel (122), mit dem zweiten Band ($T_2$) der Bänder ($T_1$, $T_2$) eine Zugspannung erteilt und mit dem das zweite Band ($T_2$) auf die Arbeitsfläche (12) bewegt wird, zwischen der Arbeitsfläche (12) und den Zuführmittel zum Zuführen des zweiten Bandes ($T_2$) der Bänder ($T_1$, $T_2$) verschiebbar ist.

**Revendications**

1. Tête (114) de diytribution debande pour appliquer deux bandes de fibres imprégnées de types différents ($T_1$, $T_2$) dans deux directions opposées sur une surface de travail (12), les différents types de bandes ($T_1$, $T_2$) étant distingués par l'orientation des fibres, comprenant: des moyens d'alimentation séparés pour distribuer chaque type de bande ($T_1$, $T_2$), des moyens de montage (14), un premier dispositif (16) de distribution monté sur les moyens (14) de montage, au voisinage de la surface de travail (12), qui comprend deux blocs de distribution espacés (26, 28) entre lesquels passe une première ($T_1$) desdites bandes ($T_1$, $T_2$) et qui viennent en contact alternativement avec ladite bande ($T_1$) pendant le déplacement de la tête (114) dans deux directions opposées, pour appliquer à ladite bande ($T_1$) une tension pour tirer la bande au-delà des blocs (26, 28) de distribution sur la surface de travail (12), et tasser ladite bande ($T_1$) ainsi distribuée dans chaque direction, et un second dispositif de distribution (116) monté sur les moyens (14) de montage au voisinage de la surface de travail (12), qui comprend des moyens pour appliquer une tension à la seconde ($T_2$) desdites bandes ($T_1$, $T_2$) et faire avancer ladite seconde bande ($T_2$) jusqu'à la surface de travail (12), et pour tasser la seconde bande ($T_2$) ainsi distribuée pendant le déplacement de la tête (114) dans seulement l'une desdites deux directions opposées, dans laquelle ledit premier dispositif de distribution (16) tasse la seconde ($T_2$) desdites bandes ($T_1$, $T_2$) pendant le déplacement de la tête (114) dans l'autre desdites deux directions opposées.

2. Tête d'application suivant la revendication 1, comprenant en outre: un premier dispositif (94) de cisaillement associé audit premier dispositif (16) de distribution, à travers lequel s'étend ladite première ($T_1$) desdites bandes ($T_1$, $T_2$), pour venir en contact et cisailler ladite première desdites bandes; et un second dispositif (134) de cisaillement associé audit second dispositif de distribution (116), à travers lequel s'étend ladite seconde ($T_2$) desdites bandes ($T_1$, $T_2$) pour venir en contact avec la seconde desdites bandes et la cisailler.

3. Tête d'application suivant la revendication 2, comprenant en outre: des moyens de guidage (64, 66) montés sur les moyens de montage (14) entre le dispositif d'alimentation (20) de ladite première ($T_1$) desdites bandes ($T_1$, $T_2$) et le premier dispositif (16) de distribution pour positionner ladite première desdites bandes et définir avec ledit premier dispositif de distribution (16) un trajet de déplacement de ladite première ($T_1$) desdites bandes ($T_1$, $T_2$) entre les moyens de guidage (64, 66) et la surface de travail (12); et un dispositif (68) d'alimentation à travers lequel s'étend ladite première ($T_1$) desdites bandes ($T_1$, $T_2$), ce dispositif d'alimentation (68) étant disposé entre les moyens de guidage (20) et le premier dispositif de cisaillement (94) pour venir en contact avec ladite première ($T_1$) desdites bandes ($T_1$, $T_2$) et la déplacer entre les deux blocs (26, 28) de distribution vers la surface de travail (12).

4. Tête d'application suivant la revendication 3, dans laquelle le dispositif d'alimentation comprend: un ensemble d'alimentation (68) qui comprend deux organes (74, 76) d'alimentation disposés de part et d'autre de ladite première ($T_1$) desdites bandes ($T_1$, $T_2$) s'étendant entre-eux et des moyens de contact (78) reliés entre les deux organes d'alimentation (74, 76) pour déplacer au moins l'un (76) des deux organes d'alimentation (74, 76) entre une position dégagée dans laquelle les deux organes (74, 76) d'alimentation sont espacés l'un de l'autre et de la première bande ($T_1$) qui s'étend entre-eux, et une position engagée en contact dans laquelle les deux organes d'alimentation (74, 76) sont en contact avec des côtés opposés de la première bande ($T_1$) s'étendant entre-eux, et des moyens d'insertion (62) pour déplacer l'ensemble d'alimentation (68) suivant le trajet de déplacement de ladite première ($T_1$) desdites bandes ($T_1$, $T_2$) entre une position rétractée dans laquelle l'ensemble (68) d'alimentation est espacé du dispositif (94) de cisaillement entre les moyens de guidage (20) et le dispositif de cisaillement (94), et une position d'extension dans laquelle les deux organes d'alimentation (74, 76) de l'ensemble (68) d'alimentation s'étendent à travers le dispositif (94) de cisaillement au voisinage immédiat des blocs (26, 28) d'alimentation.

5. Tête d'application suivant l'une quelconque des revendications 1 à 4, dans laquelle ledit premier dispositif de distribution (16) comprend: une plaque pivotante (24) sur laquelle sont fixés les deux blocs de distribution (26, 28), ladite plaque pivotante (24) étant articulée sur les moyens de montage (14); et un actionneur de distribution (36) pour entrainer en rotation la plaque pivotante (24) entre une première position dans laquelle un premier bloc de distribution (26) des deux blocs de distribution (26, 28) est disposé adjacent à la surface de travail (12) pour venir en contact avec ladite première ($T_1$) desdites bandes ($T_1$, $T_2$) et la poser sur la surface de travail (12) dans une première direction des deux directions opposées, et une seconde position dans laquelle le second bloc de distribution (28) des deux blocs (26, 28) est disposé adjacent à la surface de travail (12) pour venir en contact avec ladite première ($T_1$) desdites bandes ($T_1$, $T_2$) et poser cette première bande sur la surface de travail (12) dans la seconde direction des deux directions opposées, dans laquelle les deux blocs de distribution (26, 28) sont disposés sur la plaque pivotante (24) de façon que le trajet de déplacement de ladite première ($T_1$) desdites bandes ($T_1$, $T_2$) entre les moyens de guidage (20) et le dispositif de distribution (16) lorsque la plaque pivotante (24) est disposée dans sa première position corresponde au trajet de déplacement de ladite première ($T_1$) desdites bandes ($T_1$, $T_2$) entre les moyens de guidage (20) et le dispositif (16) de distribution lorsque la plaque pivotante (24) se trouve dans sa seconde position.

6. Tête d'application suivant l'une des revendications 1 à 5, dans laquelle les moyens (122) pour imprimer une tension à la seconde ($T_2$) desdites bandes ($T_1$, $T_2$) et faire avancer ladite seconde bande ($T_2$) vers la surface de travail (12) peuvent être déplacés entre la surface de travail (12) et le dispositif d'alimentation pour distribuer la seconde ($T_2$) desdites bandes ($T_1$, $T_2$).

# FIG.1

# FIG.2

# FIG.3

# FIG.4

**FIG 5**

76 74 78 68 82 70 58 72 88 84 14

**FIG 6**

98 96 C 102 94 100 58 14 69 C

# FIG.7

# FIG.8

0 116 137

FIG.9

7